# FASCICULE DE BREVET EUROPEEN

(11) **EP 3 847 464 B1**
(45) Date de publication et mention de la délivrance du brevet: **28.10.2026**
(21) Numéro de dépôt: 19761886.1
(22) Date de dépôt: 04.09.2019
(51) Int. Cl.: G01Q 30/02, G01N 21/35, G01Q 60/32

(54) **SYSTÈME DE MESURE DE L'ABSORPTION D'UN RAYONNEMENT LASER D'UN ÉCHANTILLON**
SYSTEM ZUR MESSUNG DER ABSORPTION EINER LASEREMISSION DURCH EINE PROBE
SYSTEM FOR MEASURING THE ABSORPTION OF A LASER EMISSION BY A SAMPLE

(30) Priorité: 06.09.2018 FR 1858000; 19.10.2018 FR 1859683
(43) Date de publication de la demande: 14.07.2021
(73) Titulaire: Centre national de la recherche scientifique, 75016 Paris (FR); Université Paris-Saclay, 91190 Gif-sur-Yvette (FR)
(72) Inventeur: DAZZI, Alexandre, 91405 Orsay (FR)
(74) Mandataire: Atout PI Laplace
(86) Numéro de dépôt international: PCT/EP2019/073600
(87) Numéro de publication internationale: WO 2020/049053

(56) Documents cités:
- WO-A1-2018/039255
- LE WANG ET AL: "Nanoscale simultaneous chemical and mechanical imaging via peak force infrared microscopy", SCIENCE ADVANCES, vol. 3, no. 6, 23 June 2017 (2017-06-23), pages e1700255 - 1, XP055600925
- TOMODA M ET AL: "Local probing of thermal properties at submicron depths with megahertz photothermal vibrations", APPLIED PHYSICS LETTERS, A I P PUBLISHING LLC, US, vol. 82, no. 4, 27 January 2003 (2003-01-27), pages 622 - 624, XP012034657, ISSN: 0003-6951, DOI: 10.1063/1.1539906

## Description

L'invention relève du domaine de la microscopie à force atomique. Plus particulièrement, elle porte sur un système de mesure de l'absorption d'un rayonnement laser par un échantillon avec une résolution spatiale nanométrique ou sub-nanométrique comprenant un modulateur acoustique et un procédé utilisant ce système.

Depuis leur développement durant le 17ème siècle, la résolution des microscopes optiques n'a fait que s'améliorer grâce aux avancées technologiques notamment grâce au progrès de fabrication et de conception des systèmes de lentilles pour dépasser les limites de l'observation microscopique. L'observation directe des objets grâce à la lumière fait, par sa simplicité, la force principale de la microscopie optique, mais c'est également sa plus grande faiblesse. À l'échelle où les objets atteignent une dimension proche de la longueur d'onde d'illumination, le phénomène de diffraction rend complexe voire impossible l'observation de détails de moins de quelques centaines de nanomètres.

Une manière de contourner cette limite de diffraction est de ne pas utiliser la lumière comme moyen direct d'observation. La microscopie à force atomique (AFM) permet ainsi de s'affranchir des limites posées par la diffraction et d'avoir accès à un niveau de détail jusqu'alors inégalé mais ne permet de « visualiser » que les reliefs d'une surface.

L'AFM permet d'analyser une surface point par point grâce à un balayage par une sonde en contact ou en proximité immédiate avec la surface d'un échantillon et la technique PTIR (pour Photo Thermal Induced Resonance) connue du document US 2008/0283,755, est une variation de cette méthode. Par l'expression proximité immédiate on entend : séparé de moins de 10 nanomètres. Cette technique permet de mesurer l'absorption infrarouge d'un échantillon en couplant un AFM avec un laser infrarouge (IR) accordable impulsionnel. L'avantage de cette approche est de pouvoir mesurer un spectre infrarouge à l'échelle de quelques nanomètres dépassant ainsi les limites de résolution classiques des microscopes. La mesure locale de l'absorption infrarouge peut se faire par le biais de la pointe d'une sonde AFM en contact avec la région de l'échantillon illuminée par le laser IR. En effet, lorsque la longueur d'onde du laser correspond à une bande d'absorption de l'échantillon, l'énergie de la lumière infrarouge absorbée est directement convertie en chaleur qui se traduit par une augmentation de température. L'échantillon va donc chauffer et se dilater rapidement pour des tirs lasers de quelques dizaines de nanosecondes. La pointe de l'AFM, se trouvant en contact avec l'échantillon, va subir une poussée (ou un choc) et mettre en vibration le levier de l'AFM. En mesurant l'amplitude des oscillations du levier de l'AFM, il est possible de remonter à la mesure de l'absorption (par une mesure directe ou par une analyse FFT des oscillations).

Par ailleurs, l'oscillation du levier est composée de nombreux modes propres de vibration et lorsque le levier subit un choc, il oscille sur tous ses modes propres. Une manière de rendre la mesure de l'absorption plus efficace est d'exciter un seul mode propre du levier en le mettant en résonance. Pour ce faire, il faut utiliser un laser qui puisse changer sa fréquence de tir dans la gamme de fréquence correspondant au mode propre du mode du levier (entre 50 et 2000 kHz) et avec une résolution de quelques dizaines de Hertz. Cette approche, que l'on appellera ici « PTIR accordable », est connue de l'homme du métier (US 8.680,467 B2).

Cependant, à l'heure actuelle, très peu de sources lasers infrarouges sont accordables en fréquence de tirs et en longueur d'onde. Seule la technologie QCL (Quantum Cascade Laser) permet cette approche ce qui limite fortement l'étendue du spectre d'absorption mesurable et le champ d'application de cette méthode. En effet, les QCL génèrent uniquement des rayonnements avec des longueurs d'ondes supérieures à 3 *µ*m.
WO2018/039255A1 divulgue une caractérisation infrarouge d'un échantillon à l'aide d'un mode d'oscillation.
OMODA M et al. APPLIED PHYSICS LETTERS, A I P PUBLISHING LLC, US, vol. 82, no. 4, 27 janvier 2003, p. 622 - 624, divulgue un sondage local des propriétés thermiques à des profondeurs submicroniques grâce à des vibrations photothermiques de la gamme des mégahertzs.

L'invention vise à étendre le spectre d'absorption mesurable par la technique PTIR accordable et donc à en élargir le champ d'application en s'affranchissant de la contrainte qu'est l'utilisation de lasers accordables en fréquence de tirs.

### RESUME

A cet effet, la revendication 1 de l'invention propose un système de mesure de l'absorption d'un rayonnement laser d'un échantillon avec une résolution spatiale nanométrique ou sub-nanométrique comprenant :
(i) une source laser impulsionnelle, adaptée pour émettre des impulsions à une longueur d'onde accordable et à une fréquence de répétition *fₗ* et agencée de manière à illuminer une portion de l'échantillon de manière à induire une expansion thermique d'une région de la surface de l'échantillon, sous la forme d'ondes mécaniques à la fréquence fₗ;
(ii) une sonde AFM comprenant une poutre portant une pointe AFM orientée suivant une direction dite verticale et agencée de manière à pouvoir être mise en contact avec la région de la surface de l'échantillon dans lequel est induite une expansion thermique d'un côté et maintenue mécaniquement d'un autre côté, la sonde AFM présentant un mode de résonance mécanique à une fréquence *fₘ* ; et
(iii) un détecteur configuré pour mesurer l'amplitude des oscillations de la sonde AFM résultant de l'absorption du rayonnement laser par la région de la surface de l'échantillon,
où ledit système comprend également un système de translation piézo-électrique adapté pour déplacer l'échantillon dans ladite direction verticale, le déplacement étant modulé à une fréquence *fₚ*, et le détecteur est configuré pour mesurer l'amplitude d'une composante de fréquence *fₘ* des oscillations de la sonde AFM, la fréquence *fₚ* étant choisie de manière à générer des oscillations de la sonde AFM à la fréquence *fₘ* par un mélange d'ondes acoustiques, caractérisé en ce que la fréquence de répétitions d'impulsions fₗ est supérieure à la moitié de la largeur spectrale à mi-hauteur du mode de résonance mécanique de fréquence de résonance fₘ.

Des aspects préférés mais non limitatifs de l'invention sont les suivants :
- la fréquence *fₚ* de modulation du déplacement du système de translation piézo-électrique est la somme ou la différence des fréquences *fₘ* et *fₗ*.
- la fréquence de répétition d'impulsions du laser est accordable.
- la source laser impulsionnelle est agencée de manière à ce que la portion de l'échantillon illuminée comprenne la région de la surface de l'échantillon en contact avec la pointe de la sonde AFM.
- la source laser impulsionnelle étant agencée de manière à ce que la portion de l'échantillon illuminée soit située sur une première face de l'échantillon, la sonde AFM étant agencée de manière à ce que la région de la surface de l'échantillon en contact avec la sonde AFM soit située sur une seconde face, opposée à la première face.

La revendication 7 de l'invention est un procédé de mesure de l'absorption d'un rayonnement laser d'un échantillon avec une résolution spatiale nanométrique ou sub-nanométrique comprenant les étapes suivantes :
a. illuminer une région de la surface de l'échantillon avec une source laser impulsionnelle adaptée pour émettre des impulsions à une longueur d'onde accordable et à une fréquence de répétition fₗ, de manière à induire des ondes mécaniques à la fréquence dans ladite région de la surface de l'échantillon;
b. placer une sonde AFM, comprenant une poutre possédant une pointe AFM orientée suivant une direction dite verticale d'un côté et maintenue mécaniquement d'un autre côté, de manière à pouvoir mettre la pointe AFM en contact avec la région illuminée de la surface de l'échantillon d'un côté, la sonde présentant un mode de résonance mécanique à une fréquence *fₘ*;
c. déplacer la surface de l'échantillon dans ladite direction verticale à l'aide d'un système de translation piézo-électrique supportant l'échantillon, le déplacement étant modulé à une fréquence *fₚ* choisie de manière à générer des oscillations de la sonde AFM à la fréquence *fₘ* par un mélange d'ondes acoustiques; et
d. détecter et mesurer l'amplitude des oscillations de la sonde AFM résultant de l'absorption du rayonnement laser par la surface, caractérisé en ce que la fréquence de répétitions d'impulsions fl est supérieure à la moitié de la largeur spectrale à mi-hauteur du mode de résonance mécanique de fréquence de résonance fm.

Selon des modes de réalisation particuliers d'un tel procédé :
- le laser illuminant la région de la surface de l'échantillon possède une fréquence de répétition d'impulsions accordable.
- on réitère les étapes a) à d) en illuminant la région de la surface de l'échantillon pour des fréquences de répétition d'impulsions *fₘ* successives et différentes.
- on réitère les étapes a) à d) en illuminant la région de la surface de l'échantillon avec des longueurs d'ondes d'illumination successives et différentes pour créer un spectre d'absorption à partir des mesures de l'amplitude des oscillations de la sonde AFM correspondant auxdites longueurs d'ondes d'illumination successives.
- on réitère les étapes a) à d) en différentes régions de la surface de l'échantillon illuminées par la source laser pour créer une carte d'absorption à partir des mesures des amplitudes des oscillations de la sonde AFM, ladite sonde AFM fonctionnant en mode « contact ».
- la sonde AFM fonctionne en mode « peak force tapping ».
- la sonde AFM fonctionne en mode « tapping ».

### BREVE DESCRIPTION DES DESSINS

D'autres caractéristiques, détails et avantages de l'invention ressortiront à la lecture de la description faite en référence aux dessins annexés donnés à titre d'exemple et qui représentent, respectivement :
- La figure 1 un schéma d'un AFM PTIR accordable et connu de l'art antérieur ;
- La figure 2, un schéma d'un système de mesure de l'absorption d'un rayonnement laser d'un échantillon avec une résolution spatiale nanométrique ou sub-nanométrique selon un mode de réalisation de l'invention ; et
- La figure 3, une carte topographique et une carte d'absorption d'un échantillon test dans deux conditions différentes.
- La figure 4, un schéma d'un système de mesure de l'absorption d'un rayonnement laser d'un échantillon avec une résolution spatiale nanométrique ou sub-nanométrique selon un autre mode de réalisation de l'invention.

Dans la suite, on entendra par « direction verticale » une direction parallèle l'orientation de la pointe AFM et « direction latérale » une direction perpendiculaire à la direction verticale. Les termes « nanométrique » et « sub-nanométrique » signifient une dimension inférieure ou égale à 100 nm, et de préférence à 10 nm, et inférieure à 1 nm respectivement.

### DESCRIPTION DETAILLE DE L'INVENTION

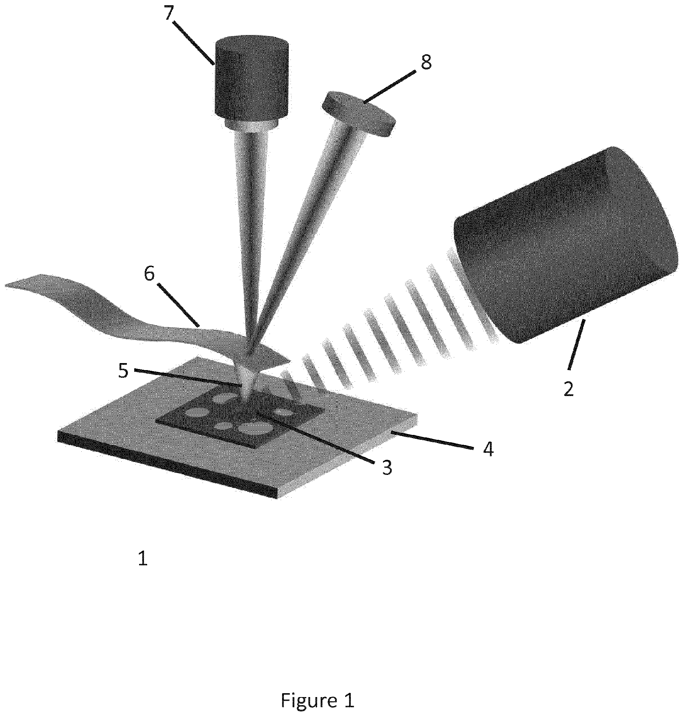

La figure 1 représente un schéma d'un AFM PTIR accordable 1 connu de l'art antérieur (par exemple US 8,680,467 B2). Ce type d'AFM permet de mesurer des détails de l'échantillon à l'échelle nanométrique. Des impulsions lasers provenant d'une source laser infrarouge 2 illuminent une région sub-micrométrique de la surface de l'échantillon 3. Si la longueur d'onde d'illumination correspond à une bande d'absorption de l'échantillon, une portion du rayonnement IR est absorbée. L'énergie de ce rayonnement va être convertie en chaleur provoquant une dilatation sous la forme d'une expansion thermique de la surface de l'échantillon qui va à son tour exciter des oscillations résonantes d'une sonde AFM au contact de cette région. Mesurer l'amplitude de ces oscillations permet de remonter à l'absorption du rayonnement IR par la région de la surface de l'échantillon (voir par exemple Dazzi, A., & Prater, C. B. (2016), AFM-IR: technology and applications in nanoscale infrared spectroscopy and chemical imaging, Chemical reviews, 117(7), 5146-5173). Afin de mesurer l'amplitude de ces oscillations une diode laser visible 7 génère un faisceau dirigé avec un certain angle vers un levier 6 de la sonde AFM qui se réfléchit vers un photodétecteur 8 et un module de traitement des données. Typiquement, le photodétecteur 8 est une diode à quadrant et le levier de la sonde AFM est placé de manière à ce que le faisceau réfléchi par le levier soit centré sur la diode à quadrant. Le levier 6 comprend en général une pointe AFM 5 en contact avec une région de la surface d'un échantillon 3. Cette pointe AFM possède dans certain cas une extrémité fine nanométrique. Les déviations verticales du levier AFM provoquées par le contact avec l'échantillon vont faire dévier le faisceau sur le photodétecteur, générant ainsi une différence de signal en Volts entre les quadrants et permettant de remonter à l'amplitude des oscillations. Dans le mode de réalisation de la figure 1, la source laser est accordable en longueur d'onde et en fréquence de répétition d'impulsions (ou fréquence de tir). La source laser 2 peut être, par exemple, un QCL. En réalisant cette mesure d'absorption avec des longueurs d'ondes d'illumination différentes et successives, il est possible d'obtenir un spectre d'absorption d'une région sub-micrométrique de la surface de l'échantillon. Un porte échantillon 4 permet de translater l'échantillon dans une direction perpendiculaire à la direction verticale avec une précision nanométrique. Dans un autre mode de réalisation, c'est la position de la sonde AFM et celle du faisceau laser qui est déplacée alors que l'échantillon reste fixe. Dans ce mode de réalisation, il est critique de conserver la superposition faisceau / pointe AFM. En déplaçant ainsi la région de la surface de l'échantillon illuminé par la source laser et en contact avec la sonde AFM et en mesurant l'absorption à une ou plusieurs longueurs d'onde, on crée une carte résolue spatialement de l'absorption de l'échantillon. De telles mesures permettent de créer des profils et des cartes d'absorption IR et fournissent des informations sur la distribution d'espèces chimiques à la surface de l'échantillon à l'échelle nanométrique.

Comme mentionné précédemment, afin d'obtenir des spectres et des cartes d'absorption robustes, il est désirable de maintenir les oscillations de la sonde AFM à une fréquence de résonance *fₘ* de cette dernière pendant les variations de positions et autres modifications de l'échantillon. Pour cela, le mode de réalisation de la figure 1 utilise des techniques connues de l'art antérieur (voir par exemple document US 8.680.467 B2) pour déterminer des fréquences de résonance de la sonde AFM *fₘ* et ensuite ajuster la fréquence de tir *fₗ* de la source laser de manière à ce qu'elle corresponde à la fréquence *fₘ*. L'ajustement de la fréquence *fₗ* permet de maintenir des conditions optimales de détection d'absorption sur une large plage de conditions expérimentales. Cependant, la nécessité de devoir ajuster cette fréquence de plusieurs *kHz* en moins d'une seconde, dans certaines conditions, limite les sources lasers permettant de réaliser cette méthode aux QCL.

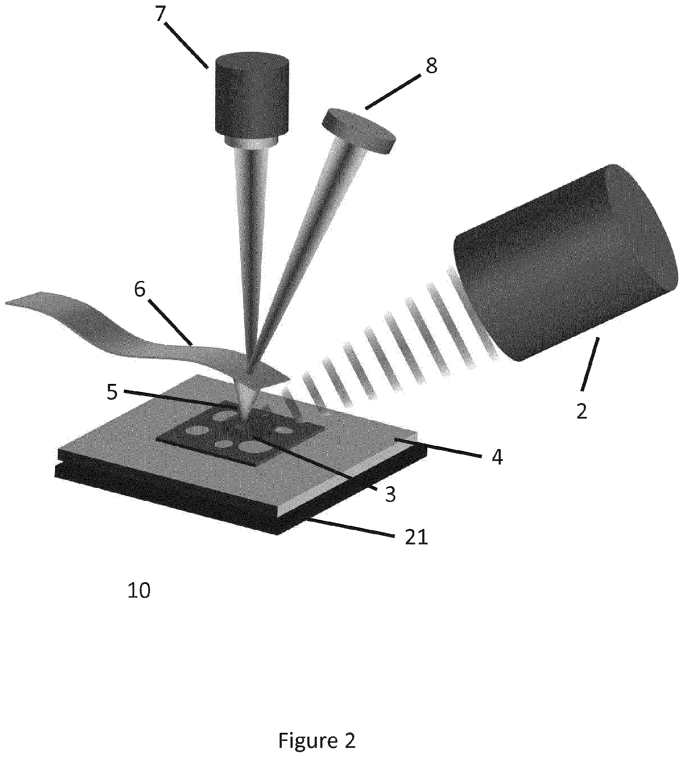

Pour contourner cette limitation, l'invention utilise un système 10 de mesure de l'absorption d'un rayonnement laser d'un échantillon avec une résolution spatiale nanométrique dont un mode de réalisation est illustré sur la figure 2. Par rapport à l'art antérieur, le système 10 comporte en plus un système de translation piézo-électrique 21 adapté pour déplacer l'échantillon dans une direction verticale aussi appelé modulateur acoustique. Le mode de réalisation de la figure 2 utilise une source laser impulsionnelle accordable en longueur d'onde mais n'ayant pas nécessairement une fréquence de répétition d'impulsion ajustable. Le système de translation piézo-électrique reçoit un courant électrique adapté à produire un déplacement dans une direction verticale dont l'amplitude est modulée à une fréquence *fₚ* telle que : *fₘ* = *fₚ + fₗ*. Par la modulation du mouvement de déplacement de l'échantillon produit par le système 10, on va pouvoir réaliser un mélange d'ondes acoustiques entre les ondes générées par le laser et celles générées par le modulateur acoustique (Cuberes, Teresa & Assender, Hazel & Briggs, George & Kolosov, Oleg. (2000), "Heterodyne Force Microscopy of PMMA/rubber Nanocomposites: Nanomappinq of Viscoelastic Response at Ultrasonic Frequencies." Journal of Physics D: Applied Physics. 33. 2347). Cela est rendu possible en jouant avec la nature non-linéaire des propriétés élastiques des échantillons en définissant une élasticité d'ordre 2 du module élastique. Ce processus est similaire à la somme de fréquence en optique non linéaire. Ainsi, on génère des oscillations du levier à la fréquence *fₘ* = *fₚ + fₗ* et on détermine l'absorption du rayonnement laser à partir de ces oscillations qui provoquent des déviations du faisceau sur le photodétecteur, analysées par le module de traitement de données. De manière similaire au mode de réalisation de la figure 1, dans le dispositif de la figure 2 il est nécessaire de déterminer les fréquences de résonances de la sonde AFM au préalable de prise de données. Dans un autre mode de réalisation, la fréquence de modulation acoustique *fₚ* est choisie de manière à ce que les oscillations du levier soient générées à une fréquence *fₘ* = *fₚ - fₗ*. Dans un autre mode de réalisation, la fréquence de modulation acoustique *fₚ* est choisie de manière à ce que les oscillations du levier soient générées à une fréquence *fₘ* = *α.fₚ + β.fₗ* avec $\left(α, β\right) ∈ {ℝ}^{2 ∗}$.

Dans le mode de réalisation de la figure 2, il est possible de réaliser des spectres d'absorption d'une région sub-micrométrique de la surface d'un échantillon en répétant des mesures d'absorption de la même région tout en changeant la longueur d'onde d'illumination de la source laser impulsionnelle accordable 2 sans qu'il y ait besoin de modifier la fréquence de répétition des impulsions *fₗ*.

De plus, le dispositif de la figure 2 permet d'obtenir des cartes ou « images » d'absorption résolues spatialement en déplaçant dans une direction latérale la région de la surface de l'échantillon illuminé par la source laser et en contact avec la sonde AFM en mesurant l'absorption de ces régions. Dans ce mode de réalisation, la sonde AFM fonctionne en mode « contact », c'est à dire qu'elle est en contact quasi-constant avec la surface de l'échantillon.

Dans un autre mode de réalisation, la sonde fonctionne en mode PFT (pour « peak force tapping » en anglais). Ce mode de fonctionnement permet un contact entre la pointe AFM et l'échantillon contrôlé pour chaque cycle PFT. Les cycles PFT sont synchronisés à une fréquence égale au double de la fréquence de tir laser. Cette technique est connue de l'art antérieur (voir Wang, Le, et al. "Nanoscale simultaneous chemical and mechanical imaging via peak force infrared microscopy." Science advances 3.6 (2017)). Comme dans le mode de réalisation de la figure 2, la photodiode enregistre les déviations du levier AFM en fonction du temps. L'expansion du volume de la région de l'échantillon illuminée par le laser va persister pendant un certain temps avant de revenir à la normale grâce à la conduction thermique de la chaleur à l'environnement. La différence entre les deux traces de déviations (expansion du volume et retour au volume initial) produites par les déviations du levier est obtenue par soustraction, donnant la trace PF (pour « peak force »).

Cette méthode permet d'éviter les problèmes liés aux forces de contact latérales et au fait de « trainer » la pointe AFM sur la surface de l'échantillon et est particulièrement appropriée pour l'étude d'échantillons collants, très petits et/ ou très fragiles.

Dans le mode de réalisation de la figure 2 la source laser 2 est une source à longueur d'onde accordable dont la fréquence de tir *fₗ* est fixe et suffisamment élevée pour que la fréquence *fₘ* = *fₚ + fₗ* ou *fₘ* = *fₚ - fₗ* soit une fréquence de résonnance de la sonde AFM sans que la fréquence *fₚ* le soit. De manière préférentielle on peut définir *fₘ* comme la fréquence centrale d'un mode de résonnance de la sonde AFM. Ainsi, si on définit la largeur spectrale à mi-hauteur du mode de résonnance du levier Δ*fₘ,* il faut que la fréquence *fₗ* soit telle que *fₗ* > Δ*fₘ*/2 afin de s'assurer que *fₚ* ne soit pas à l'intérieur du pic de résonance de la sonde de fréquence centrale *fₘ* quand *fₚ + fₗ* ou *fₚ - fₗ* l'est. Dans certains environnements contrôlés (par exemple sous vide) et/ou en améliorant le facteur de qualité de résonnance de la sonde il est possible de diminuer l'amortissement mécanique et d'obtenir des modes de résonnance possédant des largeurs spectrales à mi-hauteur inférieures ou égales à 1kHz, voire à quelques centaines de Hertz. Ainsi, dans un mode de réalisation *fₗ* est supérieure à 500Hz. Dans un autre mode de réalisation on a : *fₗ* > 10*kHz*. Dans un autre mode de réalisation on a : *fₗ* > 20*kHz*. Dans le mode de réalisation de la figure 2, la source laser 2 est un système OPO avec une fréquence de tir *fₗ* = 20 *kHz.* Dans un autre mode de réalisation, la source laser 2 est un laser continuum pulsé ou des QCLs.

Dans un mode de réalisation où la source laser est un QCL, le dispositif permet d'effectuer des mesures d'absorption en illuminant la région de la surface de l'échantillon 3 pour des fréquences de répétition d'impulsions *fₗ* et des fréquences de modulation acoustique *fₚ* successives, différentes et de façon à ce que la somme (ou respectivement la différence) de *fₚ* et *fₗ* soit constante et égale à une même fréquence de résonance de la sonde AFM *fₘ*. En effet, augmenter la fréquence de tir *fₗ* permet d'induire des effets photothermiques qui localisent les effets de diffusion thermique près de la surface et donc permettent de mesurer l'absorption dans cette zone. A l'inverse, diminuer la fréquence de tir permet une plus grande diffusion thermique et donc d'obtenir des informations sur l'absorption dans une zone plus profonde de la région illuminée de l'échantillon. Cette variation des fréquences *fₗ* et *fₚ* permet donc de réaliser une cartographie des espèces chimiques de l'échantillon à différentes épaisseurs de l'échantillon.

Par ailleurs, un autre avantage obtenu par le couplage de l'utilisation d'un QCL avec le système de translation piézo-électrique est qu'il permet d'augmenter la résolution intrinsèque de la technique AFM-PTIR accordable. En effet, il est possible d'utiliser les lasers QCL avec une fréquence de tir *fₗ* trop élevée pour être une fréquence de résonance *fₘ* de la sonde AFM - qui ne pourrait donc pas être utilisée pour effectuer des mesures d'absorption avec le dispositif de la figure 1- et d'utiliser une fréquence de modulation de déplacement *fₚ* de manière à ce que fréquence *fₘ* = *fₗ - fₚ* soit une fréquence de résonance de la sonde AFM. Comme expliqué précédemment, fonctionner avec une fréquence de tir élevée permet de générer des ondes thermiques à hautes fréquences limitant ainsi les effets de diffusion de la chaleur. Cet effet permet de localiser précisément l'effet d'expansion thermique et donc d'obtenir une meilleure résolution spatiale sur la mesure d'absorption de l'échantillon. Dans un mode de réalisation alternatif à celui du dispositif de la figure 2 la fréquence de tir de la source QCL *fₗ* = 2*MHz* - trop élevée pour être une fréquence de résonance de la sonde AFM- et on configure le système de translation piézo-électrique pour qu'il produise une fréquence de modulation acoustique *fₚ* = 1.85 *MHz* de manière à faire osciller la sonde AFM à une fréquence résonante de *fₘ* = 150 *kHz.*

Le mode de réalisation de la figure 2 permet aussi la mesure de l'absorption de rayonnement laser d'échantillon en milieu aqueux. En effet, le mélange d'onde acoustique étant un processus non linéaire, la susceptibilité de la surface de l'échantillon qui est solide est différente celle de l'eau qui est liquide. En effet, l'eau absorbe le rayonnement laser (mis à part pour des longueurs d'onde dans la fenêtre de l'eau) et détériore le rapport signal sur bruit liée au signal acoustique provenant de l'échantillon. Grâce au système de la figure 2, il est donc possible de déterminer et d'éliminer la contribution de l'absorption de l'eau dans les signaux détectés par le photodétecteur et analysés par le module de traitement de données et donc de déterminer la part de l'absorption du rayonnement due à l'échantillon.

En effet le signal somme de fréquence et différence de fréquence généré par le mode de réalisation de la figure 2 est proportionnel à l'élasticité d'ordre 2 du module élastique de l'échantillon. L'eau, qui entoure la pointe de l'AFM et l'échantillon, est egalement éclairé par le laser accordable et va donc se dilater et provoquer une onde acoustique à la fréquence du tir laser. Cette onde acoustique va aussi générer un signal somme et différence avec les ondes acoustiques du système piézo-électrique 21 mais qui sera très faible car la partie non-linéaire de module élastique de l'eau qui est liquide est négligeable par rapport à celle de l'échantillon qui est solide.

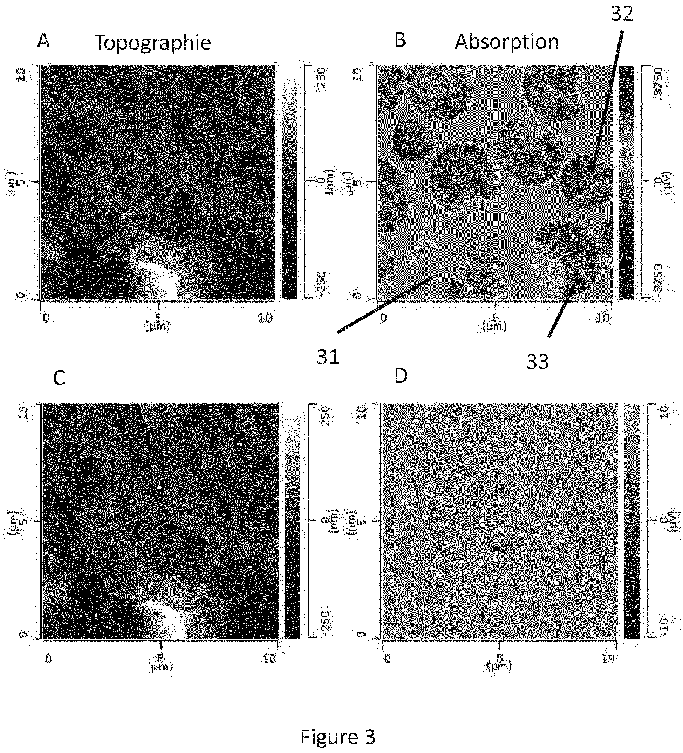

La figure 3 présente deux cartes topographiques (A et C) et deux cartes d'absorptions (B et D) d'un échantillon test obtenues avec un AFM PTIR accordable similaire à celui du mode de réalisation de la figure 2. Les images C et D sont obtenues en analysant les mêmes fréquences de la photodiode que les images A et B respectivement et sont obtenues dans les mêmes conditions, à l'exception que le système de translation piézo-électrique est désactivé.

L'image B est une carte d'absorption résolue spatialement obtenue par la méthode PTIR accordable avec un modulateur acoustique en déplaçant latéralement la région de la surface de l'échantillon illuminé par la source laser et en contact avec la sonde AFM et en y mesurant l'absorption. Cette image est obtenue en analysant les hautes fréquences des oscillations du levier AFM enregistrées par la photodiode (généralement 10khz-2Mhz).

Les cartes topographiques A et C sont des mesures de la topographie de la surface de l'échantillon obtenue en déplaçant l'échantillon latéralement pour changer la zone de contact avec la sonde AFM (qui fonctionne en mode « contact »). Ces images sont des simples mesures du relief de l'échantillon. Elles sont construites à partir des variations de basses fréquences du levier AFM enregistrées par la photodiode (généralement <1kHz). De par la différence des fréquences permettant de construire les images topographique et d'absorption, il est possible d'obtenir les deux types d'images de manière simultanée.

Dans ce mode de réalisation la source laser est un QCL fonctionnant avec une fréquence de tir fixe *fₗ* = 1.990 *MHz* et une longueur d'onde de 5.78 *µm* avec une durée d'impulsion de 60 *ns.* L'échantillon test est réalisé sur une matrice d'époxy 31 et comporte des billes de PMMA 33 (grand diamètre) et de polystyrène 32 (petit diamètre). Pour les images A et B, le système de translation piézo-électrique 21 génère un déplacement dans la direction verticale modulé à une fréquence *fₚ* = 1.723 *MHz.* Grâce au mélange d'ondes acoustiques, la sonde AFM oscille à la fréquence de résonance ${f}_{m} = {f}_{l} - {f}_{p} = 267 kHz .$

Dans l'image D, bien que la longueur d'onde du laser reste identique à celle utilisée pour l'image B et correspond à une bande d'absorption de l'échantillon, il est impossible de remonter à une carte d'absorption de l'échantillon sans l'utilisation du système de translation pièzo-électrique. Cette différence prouve donc que la somme de fréquence acoustique fonctionne grâce à l'utilisation du système de translation pièzo-électrique.

Dans un autre mode de réalisation la sonde AFM possède une structure différente d'un levier encastré. Cependant la sonde AFM possède forcément une résonance mécanique et un microsystème électromécanique.

Dans un autre mode de réalisation la détection du déplacement de la sonde est réalisée par une détection capacitive, piézorésistive, piézoélectrique, par couplage de guides d'onde planaires ou tout autres méthodes connues de l'homme du métier.

Dans un autre mode de réalisation le laser peut être d'un type quelconque, pourvu que l'on puisse obtenir des impulsions avec une cadence compatible avec la mise en œuvre de l'invention et, de préférence, une certaine accordabilité en longueur d'onde. La plage spectrale d'émission du laser peut aller de l'infrarouge à l'ultraviolet et la durée des impulsions est quelconque pourvu qu'elle permette d'induire un effet photothermique.

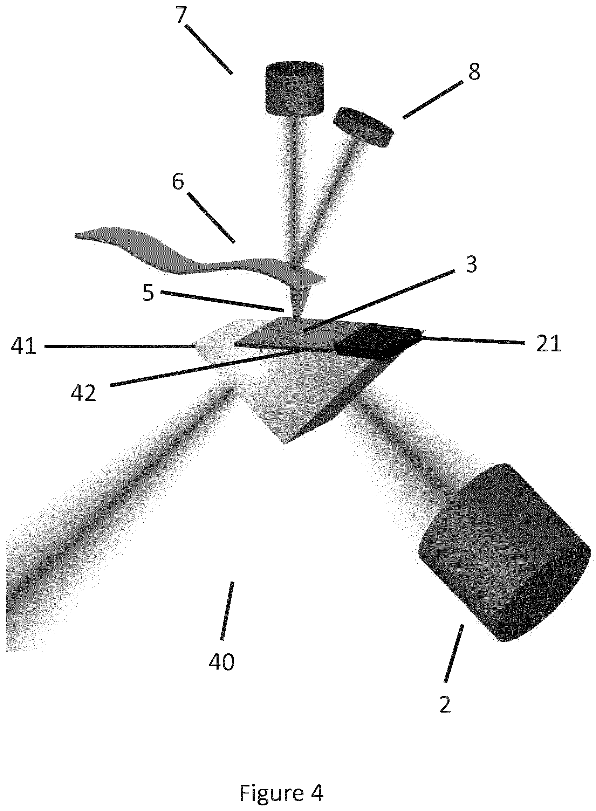

La figure 4 illustre un mode de réalisation 40 « bottom up illumination » de l'invention. Dans le mode de réalisation de la figure 4, au lieu d'être fixé à un porte-échantillon, l'échantillon est déposé sur la face supérieure d'un prisme 41 transparent à la longueur d'onde d'émission du laser 2. Par « transparent » on entend ici une transmission supérieure à 50%, préférentiellement 75% et encore préférentiellement 90 %. Ce prisme peut, par exemple, être en ZnSe. Le faisceau laser est alors dirigé dans le prisme qui est agencé de manière à obtenir une réflexion totale interne du faisceau laser et ainsi obtenir une onde se propageant dans l'échantillon et une onde évanescente dans l'air. Grâce au couplage du prisme avec le faisceau laser, une portion de l'échantillon 42 va être exposée au rayonnement laser et absorber une partie de ce rayonnement. Comme expliqué précédemment, cette absorption va induire une expansion thermique d'une région de la surface de l'échantillon 3 qui est en contact avec la pointe de la sonde AFM. C'est la propagation de la déformation induite par l'effet photothermique vers la surface de l'échantillon qui va induire le déplacement de la sonde AFM et permettre la mesure de l'absorption. Ce mode de réalisation est particulièrement adapté à l'étude d'échantillons peu épais (moins de 1*µm*). Dans le système 40, la portion de l'échantillon illuminée 42 est située sur la face de l'échantillon en contact avec le prisme et la région de la surface de l'échantillon 3 en contact avec la pointe de la sonde AFM est située sur la face en contact avec l'air, soit la face opposée à celle de la portion illuminée 42. En effet, pour obtenir une résolution nanométrique de l'absorption du rayonnement laser, il est nécessaire que l'éclairement par l'onde évanescente puisse être homogène sur toute l'épaisseur de l'échantillon.

Dans le système 40, le système de translation pièzoélectrique 21 est collé à côté de l'échantillon sur la face supérieure du prisme de manière à pouvoir transmettre les ondes acoustiques à l'échantillon et le faire osciller verticalement à une fréquence *fₚ*. Dans ce mode de réalisation, le système piézoélectrique (21) transmet des ondes acoustiques aussi bien à l'échantillon que dans le prisme. Cependant, l'amplitude des ondes acoustiques générées est bien trop faible pour perturber le couplage prisme/laser et n'influe donc pas sur l'illumination de l'échantillon.

Dans un autre mode de réalisation le système de translation 21 n'est pas collé sur la face supérieure du prisme mais sur la face du prisme d'où ressort le faisceau laser après réflexion totale interne.

Dans un autre mode de réalisation, la sonde AFM fonctionne en mode « tapping », ou « contact intermittent ». Dans ce mode de réalisation, il s'agit de faire vibrer le levier à une fréquence propre de résonance du mode « tapping » de la sonde avec une certaine amplitude. Les modes de résonnances « tapping » possèdent des fréquences de résonnances différentes des modes de résonnance « contact » car la pointe n'est pas en contact permanent avec l'échantillon dans le mode « tapping ». Lorsque la pointe interagit avec la surface de l'échantillon, l'amplitude d'oscillation du levier diminue. L'appareil mesure cette différence d'amplitude, ce qui permet d'obtenir des informations sur l'échantillon à analyser comme sa hauteur locale par exemple. Un rétrocontrôle est ensuite effectué pour ajuster la hauteur de l'échantillon et poursuivre les mesures afin de minimiser l'usure de la pointe. Dans ce mode de réalisation, la fréquence de modulation acoustique *fₚ* est choisie de manière à ce que la fréquence *fₘ = α.fₚ + β. fₗ* avec $\left(α, β\right) ∈ {ℝ}^{2 ∗}$ et la fréquence *fₚ* soient égales à des fréquences de résonance du mode « tapping » de la sonde AFM.

## Revendications

1. Système de mesure de l'absorption d'un rayonnement laser d'un échantillon avec une résolution spatiale nanométrique ou sub-nanométrique (10) comprenant :
(i) une source laser impulsionnelle (2), adaptée pour émettre des impulsions à une longueur d'onde accordable et à une fréquence de répétition *fₗ* et agencée de manière à illuminer une portion de l'échantillon de manière à induire une expansion thermique d'une région de la surface de l'échantillon (3), sous la forme d'ondes mécaniques à la fréquence *fₗ*;
(ii) une sonde AFM comprenant une poutre (6) portant une pointe AFM (5) orientée suivant une direction dite verticale et agencée de manière à pouvoir être mise en contact avec la région de la surface de l'échantillon dans lequel est induite une expansion thermique (3) d'un côté et maintenue mécaniquement d'un autre côté, la sonde AFM présentant un mode de résonance mécanique à une fréquence *fₘ* ; et
(iii) un détecteur (8) configuré pour mesurer l'amplitude des oscillations de la sonde AFM résultant de l'absorption du rayonnement laser par la région de la surface de l'échantillon (3),
où ledit système comprend également un système de translation piézo-électrique (21) adapté pour déplacer l'échantillon dans ladite direction verticale, le déplacement étant modulé à une fréquence *fₚ*, et le détecteur est configuré pour mesurer l'amplitude d'une composante de fréquence *fₘ* des oscillations de la sonde AFM, la fréquence *fₚ* étant choisie telle que *fₘ* = *α. fₚ + β.fₗ* avec $\left(α, β\right) ∈ {ℝ}^{2 ∗}$ de manière à générer des oscillations de la sonde AFM à la fréquence *fₘ* par un mélange non linéaire d'ondes acoustiques dans l'échantillon entre lesdites ondes mécaniques à la fréquence *fₗ* et des ondes générées par le système de translation piézo-électrique à la fréquence *fₚ*, **caractérisé en ce que** la fréquence de répétitions d'impulsions *fₗ* est supérieure à la moitié de la largeur spectrale à mi-hauteur du mode de résonance mécanique de fréquence de résonance *fₘ*.

2. Système de mesure de l'absorption d'un rayonnement laser d'un échantillon avec une résolution spatiale nanométrique ou sub-nanométrique selon la revendication 1, dans lequel la fréquence *fₚ* de modulation du déplacement du système de translation piézo-électrique est la somme ou la différence des fréquences *fₘ* et *fₗ*, ou encore telle que *fₚ = fₗ* - *fₘ*.

3. Système de mesure de l'absorption d'un rayonnement laser d'un échantillon avec une résolution spatiale nanométrique ou sub-nanométrique selon l'une quelconque des revendications précédentes, dans lequel la fréquence de répétition d'impulsions du laser est accordable.

4. Système de mesure de l'absorption d'un rayonnement laser d'un échantillon avec une résolution spatiale nanométrique ou sub-nanométrique selon l'une quelconque des revendications précédentes, dans lequel la source laser impulsionnelle est agencée de manière à ce que la portion de l'échantillon illuminée comprenne la région de la surface de l'échantillon en contact avec la pointe de la sonde AFM (3).

5. Système de mesure de l'absorption d'un rayonnement laser d'un échantillon avec une résolution spatiale nanométrique ou sub-nanométrique selon l'une quelconque des revendications 1 à 3, la source laser impulsionnelle étant agencée de manière à ce que la portion de l'échantillon illuminée (42) soit située sur une première face de l'échantillon, la sonde AFM étant agencée de manière à ce que la région de la surface de l'échantillon en contact avec la sonde AFM (3) soit située sur une seconde face, opposée à la première face .

6. Système de mesure de l'absorption d'un rayonnement laser d'un échantillon avec une résolution spatiale nanométrique ou sub-nanométrique selon l'une quelconque des revendications 1 à 5, dans lequel la fréquence de répétition d'impulsions *fₗ* est supérieure à 10 kHz.

7. Procédé de mesure de l'absorption d'un rayonnement laser d'un échantillon avec une résolution spatiale nanométrique ou sub-nanométrique comprenant les étapes suivantes :
a. illuminer une région de la surface de l'échantillon (3) avec une source laser impulsionnelle (2) adaptée pour émettre des impulsions à une longueur d'onde accordable et à une fréquence de répétition *fₗ*, de manière à induire des ondes mécaniques à la fréquence *fₗ* dans ladite région de la surface de l'échantillon (3);
b. placer une sonde AFM, comprenant une poutre (6) possédant une pointe AFM (5) orientée suivant une direction dite verticale d'un côté et maintenue mécaniquement d'un autre côté, de manière à pouvoir mettre la pointe AFM en contact avec la région illuminée de la surface de l'échantillon (3) d'un côté, la sonde présentant un mode de résonance mécanique à une fréquence *fₘ*;
c. déplacer la surface de l'échantillon dans ladite direction verticale à l'aide d'un système de translation piézo-électrique (21) supportant l'échantillon, le déplacement étant modulé à une fréquence *fₚ* choisie telle que *fₘ* = *α*. *fₚ + β. fₗ* avec $\left(α, β\right) ∈ {ℝ}^{2 ∗}$ de manière à générer des oscillations de la sonde AFM à la fréquence *fₘ* par un mélange non linéaire d'ondes acoustiques dans l'échantillon entre lesdites ondes mécaniques à la fréquence *fₗ* et des ondes générées par le système de translation piézo-électrique à la fréquence *fₚ* et
d. détecter et mesurer l'amplitude des oscillations de la sonde AFM résultant de l'absorption du rayonnement laser par la surface, **caractérisé en ce que** la fréquence de répétitions d'impulsions *fₗ* est supérieure à la moitié de la largeur spectrale à mi-hauteur du mode de résonance mécanique de fréquence de résonnance *fₘ*.

8. Procédé de mesure de l'absorption d'un rayonnement laser d'un échantillon avec une résolution spatiale nanométrique ou sub-nanométrique selon la revendication 7, dans lequel la fréquence *fₚ* de modulation du déplacement du système de translation piézo-électrique est la somme ou la différence des fréquences *fₘ* et *fₗ* ou encore telle que *fₚ = fₗ* - *fₘ*.

9. Procédé de mesure de l'absorption d'un rayonnement laser d'un échantillon avec une résolution spatiale nanométrique ou sub-nanométrique selon la revendication 7 ou la revendication 8, dans lequel le laser illuminant la région de la surface de l'échantillon possède une fréquence de répétition d'impulsions accordable.

10. Procédé de mesure de l'absorption d'un rayonnement laser d'un échantillon avec une résolution spatiale nanométrique ou sub-nanométrique selon la revendication précédente, dans lequel on réitère les étapes a) à d) en illuminant la région de la surface de l'échantillon pour des fréquences de répétition d'impulsions *fₗ* successives et différentes

11. Procédé de mesure de l'absorption d'un rayonnement laser d'un échantillon avec une résolution spatiale nanométrique ou sub-nanométrique selon l'une quelconque des revendications 7 à 10, dans lequel on réitère les étapes a) à d) en illuminant la région de la surface de l'échantillon avec des longueurs d'ondes d'illumination successives et différentes pour créer un spectre d'absorption à partir des mesures de l'amplitude des oscillations de la sonde AFM correspondant aux dites longueurs d'ondes d'illumination successives.

12. Procédé de mesure de l'absorption d'un rayonnement laser d'un échantillon avec une résolution spatiale nanométrique ou sub-nanométrique selon la revendication 8, dans lequel on réitère les étapes a) à d) en illuminant la région de la surface de l'échantillon pour des fréquences de répétition d'impulsions *fₗ* et des fréquences de modulation acoustique *fₚ* successives, différentes de manière à cartographier des espèces chimiques de l'échantillon à différentes épaisseurs de l'échantillon.

13. Procédé de mesure de l'absorption d'un rayonnement laser d'un échantillon avec une résolution spatiale nanométrique ou sub-nanométrique selon l'une quelconque des revendications 7 à 12, dans lequel on réitère les étapes a) à d) en différentes régions de la surface de l'échantillon illuminées par la source laser pour créer une carte d'absorption à partir des mesures des amplitudes des oscillations de la sonde AFM, ladite sonde AFM fonctionnant en mode « contact ».

14. Procédé de mesure de l'absorption d'un rayonnement laser d'un échantillon avec une résolution spatiale nanométrique ou sub-nanométrique selon l'une quelconque des revendications 7 à 12, dans lequel la sonde AFM fonctionne en mode « peak force tapping ».

15. Procédé de mesure de l'absorption d'un rayonnement laser d'un échantillon avec une résolution spatiale nanométrique ou sub-nanométrique selon l'une quelconque des revendications 7 à 12, dans lequel la sonde AFM fonctionne en mode contact intermittent.

## Patentansprüche

1. System zur Messung der Absorption einer Laserstrahlung einer Probe mit einer nanometrischen oder sub-nanometrischen räumlichen Auflösung (10), umfassend:
(i) eine Laserimpulsquelle (2), die angepasst ist, um Impulse mit einer einstellbaren Wellenlänge und mit einer Wiederholungsfrequenz *fₗ* auszugeben und so eingerichtet ist, dass sie einen Abschnitt der Probe so beleuchtet, dass eine Wärmeausdehnung eines Bereichs der Oberfläche der Probe (3) in Form von mechanischen Wellen mit der Frequenz *fₗ* induziert wird;
(ii) eine AFM-Sonde, die einen Träger (6) umfasst, der eine AFM-Spitze (5) trägt, die in einer als vertikal bezeichneten Richtung ausgerichtet ist und so eingerichtet ist, dass sie einerseits mit dem Bereich der Oberfläche der Probe in Kontakt gebracht werden kann, in dem eine Wärmeausdehnung (3) induziert wird, und andererseits mechanisch gehalten wird, wobei die AFM-Sonde einen mechanischen Resonanzmodus mit einer Frequenz *fₘ* aufweist; und
(iii) einen Detektor (8), der konfiguriert ist, um die Amplitude der Oszillationen der AFM-Sonde zu messen, die aus der Absorption der Laserstrahlung durch den Bereich der Oberfläche der Probe (3) resultieren,
wobei das System ebenfalls ein piezo-elektrisches Verschiebungssystem (21) umfasst, das angepasst ist, um die Probe in die vertikale Richtung zu verlagern, wobei die Verlagerung mit einer Frequenz *fₚ* moduliert wird, und der Detektor konfiguriert ist, um die Amplitude einer Frequenzkomponente *fₘ* der Oszillationen der AFM-Sonde zu messen, wobei die Frequenz *fₚ* so ausgewählt wird, dass *fₘ* = *α*. *fₚ* + *β*. *fₗ*, wobei $\left(α, β\right) ∈ {ℝ}^{2 ∗}$, so dass Oszillationen der AFM-Sonde mit der Frequenz *fₘ* durch eine nichtlineare Mischung von akustischen Wellen in der Probe unter den mechanischen Wellen mit der Frequenz *fₗ* und durch das piezo-elektrische Verschiebungssystem erzeugte Wellen mit der Frequenz *fₚ* erzeugt werden, **dadurch gekennzeichnet, dass** die Impulswiederholungsfrequenz *fₗ* auf halber Höhe des mechanischen Resonanzmodus der Resonanzfrequenz *fₘ* größer ist als die Hälfte der spektralen Länge.

2. System zur Messung der Absorption einer Laserstrahlung einer Probe mit einer nanometrischen oder sub-nanometrischen räumlichen Auflösung nach Anspruch 1, wobei die Modulationsfrequenz *fₚ* der Verschiebung des piezo-elektrischen Verlagerungssystems die Summe oder die Differenz der Frequenzen *fₘ* und *fₗ* ist oder derart ist, dass *fₚ* = *fₗ* - *fₘ*.

3. System zur Messung der Absorption einer Laserstrahlung einer Probe mit einer nanometrischen oder sub-nanometrischen räumlichen Auflösung nach einem der vorstehenden Ansprüche, wobei die Impulswiederholungsfrequenz des Lasers einstellbar ist.

4. System zur Messung der Absorption einer Laserstrahlung einer Probe mit einer nanometrischen oder sub-nanometrischen räumlichen Auflösung nach einem der vorstehenden Ansprüche, wobei die Impulslaserquelle so eingerichtet ist, dass der beleuchtete Abschnitt der Probe den Bereich der Oberfläche der Probe in Kontakt mit der Spitze der AFM-Sonde (3) umfasst.

5. System zur Messung der Absorption einer Laserstrahlung einer Probe mit einer nanometrischen oder sub-nanometrischen räumlichen Auflösung nach einem der Ansprüche 1 bis 3, wobei die Impulslaserquelle so eingerichtet ist, dass der beleuchtete Abschnitt der Probe (42) sich auf einer ersten Seite der Probe befindet, wobei die AFM-Sonde so eingerichtet ist, dass der Bereich der Oberfläche der Probe in Kontakt mit der AFM-Sonde (3) sich auf einer zweiten Seite, die der ersten Seite gegenüberliegt, befindet.

6. System zur Messung der Absorption einer Laserstrahlung einer Probe mit einer nanometrischen oder sub-nanometrischen räumlichen Auflösung nach einem der Ansprüche 1 bis 5, wobei die Impulswiederholungsfrequenz *fₗ* größer als 10 kHz ist.

7. Verfahren zur Messung der Absorption einer Laserstrahlung einer Probe mit einer nanometrischen oder sub-nanometrischen räumlichen Auflösung, umfassend die folgenden Schritte:
a: Beleuchten eines Bereichs der Oberfläche der Probe (3) mit einer Laserimpulsquelle (2), die angepasst ist, um Impulse mit einer einstellbaren Wellenlänge und mit einer Wiederholungsfrequenz *fₗ* so auszugeben, dass mechanische Wellen mit der Frequenz *fₗ* im Bereich der Oberfläche der Probe (3) induziert werden;
b. Platzieren einer AFM-Sonde, die einen Träger (6) umfasst, der eine AFM-Spitze (5) besitzt, die einerseits in einer als vertikal bezeichneten Richtung ausgerichtet ist und andererseits so mechanisch gehalten wird, dass die AFM-Spitze mit dem beleuchteten Bereich der Oberfläche der Probe (3) einerseits in Kontakt gebracht werden kann, wobei die Sonde einen mechanischen Resonanzmodus mit einer Frequenz *fₘ* aufweist;
c. Verlagern der Oberfläche der Probe in der vertikalen Richtung mithilfe eines piezo-elektrischen Verschiebungssystems (21), das die Probe trägt, wobei die Verlagerung mit einer Frequenz *fₚ* moduliert wird, die so ausgewählt wird, dass *fₘ* = *α*. *fₚ* + *β*. *fₗ*, wobei $\left(α, β\right) ∈ {ℝ}^{2 ∗}$, so dass Oszillationen der AFM-Sonde mit der Frequenz *fₘ* durch eine nichtlineare Mischung von akustischen Wellen in der Probe unter den mechanischen Wellen mit der Frequenz *fₗ* und durch das piezo-elektrische Verschiebungssystem erzeugte Wellen mit der Frequenz *fₚ* erzeugt werden, und
d. Erfassen und Messen der Amplitude der Oszillationen der AFM-Sonde, die aus der Absorption der Laserstrahlung durch die Oberfläche resultieren, **dadurch gekennzeichnet, dass** die Impulswiederholungsfrequenz *fₗ* auf halber Höhe des mechanischen Resonanzmodus der Resonanzfrequenz *fₘ* größer ist als die Hälfte der spektralen Länge.

8. Verfahren zur Messung der Absorption einer Laserstrahlung einer Probe mit einer nanometrischen oder sub-nanometrischen räumlichen Auflösung nach Anspruch 7, wobei die Modulationsfrequenz f ₚ der Verschiebung des piezo-elektrischen Verlagerungssystems die Summe oder die Differenz der Frequenzen *fₘ* und *fₗ* ist oder derart ist, dass *fₚ* = *fₗ* - *fₘ.*

9. Verfahren zur Messung der Absorption einer Laserstrahlung einer Probe mit einer nanometrischen oder sub-nanometrischen räumlichen Auflösung nach Anspruch 7 oder Anspruch 8, wobei der Laser, der den Bereich der Oberfläche der Probe beleuchtet, eine einstellbare Impulswiederholungsfrequenz besitzt.

10. Verfahren zur Messung der Absorption einer Laserstrahlung einer Probe mit einer nanometrischen oder sub-nanometrischen räumlichen Auflösung nach dem vorstehenden Anspruch, wobei die Schritte a) bis d) wiederholt werden, indem der Bereich der Oberfläche der Probe für aufeinanderfolgende und unterschiedliche Impulswiederholungsfrequenzen *fₗ* beleuchtet wird.

11. Verfahren zur Messung der Absorption einer Laserstrahlung einer Probe mit einer nanometrischen oder sub-nanometrischen räumlichen Auflösung nach einem der Ansprüche 7 bis 10, wobei die Schritte a) bis d) wiederholt werden, indem der Bereich der Oberfläche der Probe mit aufeinanderfolgenden und unterschiedlichen Beleuchtungswellenlängen beleuchtet wird, um ausgehend von den Messungen der Oszillationsamplituden der AFM-Sonde, die den aufeinanderfolgenden Beleuchtungswellenlängen entsprechen, ein Absorptionsspektrum zu erzeugen.

12. Verfahren zur Messung der Absorption einer Laserstrahlung einer Probe mit einer nanometrischen oder sub-nanometrischen räumlichen Auflösung nach Anspruch 8, wobei die Schritte a) bis d) wiederholt werden, indem der Bereich der Oberfläche der Probe für Impulswiederholungsfrequenzen *fₗ* und für aufeinanderfolgende akustische Modulationsfrequenzen *fₚ* beleuchtet wird, die sich so unterscheiden, dass chemische Spezies der Probe bei unterschiedlichen Dicken der Probe kartografiert werden

13. Verfahren zur Messung der Absorption einer Laserstrahlung einer Probe mit einer nanometrischen oder sub-nanometrischen räumlichen Auflösung nach einem der Ansprüche 7 bis 12, wobei die Schritte a) bis d) in unterschiedlichen von der Laserquelle beleuchteten Bereichen der Oberfläche der Probe wiederholt werden, um ausgehend von den Messungen der Oszillationsamplituden der AFM-Sonde ein Absorptionsspektrum zu erzeugen, wobei die AFM-Sonde im "Kontakt"-Modus arbeitet.

14. Verfahren zur Messung der Absorption einer Laserstrahlung einer Probe mit einer nanometrischen oder sub-nanometrischen räumlichen Auflösung nach einem der Ansprüche 7 bis 12, wobei die AFM-Sonde im "Peak-Force-Tapping"-Modus arbeitet.

15. Verfahren zur Messung der Absorption einer Laserstrahlung einer Probe mit einer nanometrischen oder sub-nanometrischen räumlichen Auflösung nach einem der Ansprüche 7 bis 12, wobei die AFM-Sonde im intermittierenden Kontaktmodus arbeitet.

## Claims

1. System for measuring absorption of laser radiation by a sample with nanometric or sub-nanometric spatial resolution (10), comprising:
(i) a pulsed laser source (2), adapted to emit pulses at a tunable wavelength and at a pulse repetition frequency *fₗ* and arranged to illuminate a portion of the sample so as to induce thermal expansion of a region of the surface of the sample (3), in the form of mechanical waves at the frequency *fₗ*;
(ii) an AFM probe comprising a beam (6) carrying an AFM tip (5) oriented along a so-called vertical direction and arranged so as to be capable of being brought into contact with the region of the surface of the sample in which thermal expansion (3) is induced on one side and mechanically supported on the other side, the AFM probe exhibiting a mechanical resonance mode at a frequency *fₘ*; and
(iii) a detector (8) configured to measure the amplitude of oscillations of the AFM probe resulting from absorption of the laser radiation by the region of the surface of the sample (3),
wherein said system further comprises a piezoelectric translation system (21) adapted to move the sample in said vertical direction, the movement being modulated at a frequency *fₚ*, and the detector is configured to measure the amplitude of a frequency component *fₘ* of the oscillations of the AFM probe, the frequency *fₚ* being selected such that *fₘ* = α. *fₚ* + β. *fₗ* with $\left(α, β\right) ∈ {ℝ}^{2 ∗}$ so as to generate oscillations of the AFM probe at the frequency *fₘ* by nonlinear mixing of acoustic waves in the sample between said mechanical waves at the frequency *fₗ* and waves generated by the piezoelectric translation system at the frequency *fₚ*, **characterized in that** the pulse repetition frequency *fₗ* is greater than half the full width at half maximum spectral width of the mechanical resonance mode having the resonance frequency *fₘ*.

2. System for measuring absorption of laser radiation by a sample with nanometric or sub-nanometric spatial resolution according to claim 1, wherein the modulation frequency *fₚ* of the movement of the piezoelectric translation system is the sum or the difference of the frequencies *fₘ* and *fₗ* or alternatively such that *fₚ* = *fₗ* - *fₘ*.

3. System for measuring absorption of laser radiation by a sample with nanometric or sub-nanometric spatial resolution according to any one of the preceding claims, wherein the pulse repetition frequency of the laser is tunable.

4. System for measuring absorption of laser radiation by a sample with nanometric or sub-nanometric spatial resolution according to any one of the preceding claims, wherein the pulsed laser source is arranged such that the illuminated portion of the sample comprises the region of the surface of the sample in contact with the tip of the AFM probe (3).

5. System for measuring absorption of laser radiation by a sample with nanometric or sub-nanometric spatial resolution according to any one of claims 1 to 3, the pulsed laser source being arranged such that the illuminated portion of the sample (42) is situated on a first face of the sample, the AFM probe being arranged such that the region of the surface of the sample in contact with the AFM probe (3) is situated on a second face opposite the first face.

6. System for measuring absorption of laser radiation by a sample with nanometric or sub-nanometric spatial resolution according to any one of claims 1 to 5, wherein the pulse repetition frequency *fₗ* is greater than 10 kHz.

7. Method for measuring absorption of laser radiation by a sample with nanometric or sub-nanometric spatial resolution, comprising the following steps:
a. illuminating a region of the surface of the sample (3) with a pulsed laser source (2) adapted to emit pulses at a tunable wavelength and at a pulse repetition frequency *fₗ*, so as to induce mechanical waves at the frequency *fₗ* in said region of the surface of the sample (3);
b. positioning an AFM probe comprising a beam (6) having an AFM tip (5) oriented along a so-called vertical direction at one side and mechanically supported at the other side, so as to bring the AFM tip into contact with the illuminated region of the surface of the sample (3) on one side, the probe exhibiting a mechanical resonance mode at a frequency *fₘ*;
c. moving the surface of the sample in said vertical direction by means of a piezoelectric translation system (21) supporting the sample, the movement being modulated at a frequency *fₚ* selected such that *fₘ* = α. *fₚ* + β. *fₗ* with $\left(α, β\right) ∈ {ℝ}^{2 ∗}$ so as to generate oscillations of the AFM probe at the frequency *fₘ* by nonlinear mixing of acoustic waves in the sample between said mechanical waves at the frequency *fₗ* and waves generated by the piezoelectric translation system at the frequency *fₚ* and
d. detecting and measuring the amplitude of oscillations of the AFM probe resulting from absorption of the laser radiation by the surface, **characterized in that** the pulse repetition frequency *fₗ* is greater than half the full width at half maximum spectral width of the mechanical resonance mode having the resonance frequency *fₘ*.

8. Method for measuring absorption of laser radiation by a sample with nanometric or sub-nanometric spatial resolution according to claim 7, wherein the modulation frequency *fₚ* of the movement of the piezoelectric translation system is the sum or the difference of the frequencies *fₘ* and *fₗ* or alternatively such that *fₚ* = *fₗ* - *fₘ.*

9. Method for measuring absorption of laser radiation by a sample with nanometric or sub-nanometric spatial resolution according to claim 7 or claim 8, wherein the laser illuminating the region of the surface of the sample has a tunable pulse repetition frequency.

10. Method for measuring absorption of laser radiation by a sample with nanometric or sub-nanometric spatial resolution according to the preceding claim, wherein steps a) to d) are repeated while illuminating the region of the surface of the sample at successive, different pulse repetition frequencies *fₗ*.

11. Method for measuring absorption of laser radiation by a sample with nanometric or sub-nanometric spatial resolution according to any one of claims 7 to 10, wherein steps a) to d) are repeated while illuminating the region of the surface of the sample with successive, different illumination wavelengths to create an absorption spectrum from measurements of the amplitude of the oscillations of the AFM probe corresponding to said successive illumination wavelengths.

12. Method for measuring absorption of laser radiation by a sample with nanometric or sub-nanometric spatial resolution according to claim 8, wherein steps a) to d) are repeated while illuminating the region of the surface of the sample at successive, different pulse repetition frequencies *fₗ* and successive, different acoustic modulation frequencies *fₚ* so as to map chemical species in the sample at different depths within the sample.

13. Method for measuring absorption of laser radiation by a sample with nanometric or sub-nanometric spatial resolution according to any one of claims 7 to 12, wherein steps a) to d) are repeated in different regions of the surface of the sample illuminated by the laser source to create an absorption map from measurements of the amplitudes of the oscillations of the AFM probe, said AFM probe operating in contact mode.

14. Method for measuring absorption of laser radiation by a sample with nanometric or sub-nanometric spatial resolution according to any one of claims 7 to 12, wherein the AFM probe operates in peak force tapping mode.

15. Method for measuring absorption of laser radiation by a sample with nanometric or sub-nanometric spatial resolution according to any one of claims 7 to 12, wherein the AFM probe operates in intermittent contact mode.
